Europäisches Patentamt

European Patent Office

Office européen des brevets

(19)

(11) **EP 1 116 579 A1**

(12) **EUROPEAN PATENT APPLICATION**

(43) Date of publication:
**18.07.2001 Bulletin 2001/29**

(51) Int Cl.7: **B32B 5/18**, B32B 27/32,
B65D 81/34, B29C 51/10,
B29K 105/04
// B29K105:04

(21) Application number: **01100051.0**

(22) Date of filing: **09.01.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **12.01.2000 JP 2000003253
24.01.2000 JP 2000014692**

(71) Applicant: **Sumitomo Chemical Company,
Limited
Chuo-ku Osaka 541-8550 (JP)**

(72) Inventors:
• **Usui, Nobuhiro
Takatsuki-shi, Osaka (JP)**
• **Kitayama, Takeo
Ibaraki-shi, Osaka (JP)**

(74) Representative: **VOSSIUS & PARTNER
Siebertstrasse 4
81675 München (DE)**

(54) **Foamed polyolefin-based resin container and process for producing the same**

(57)    The present invention provides a foamed polyolefin-based resin container 1(a) formed from a foamed polyolefin-based resin sheet comprising a foamed layer having an expansion ratio of from 1.5 to 8 times and a thickness of not greater than 6 mm wherein a draw ratio [(the height of the container)/(the minimum dimension of an opening of the container)] is from 0.6 to 1.5 and a process for producing the same, and the like. The container relates to a container for food products such as retorted food products, particularly to a container for food products using a foamed polyolefin-based resin sheet as a substrate.

Figure 1

EP 1 116 579 A1

**Description**

The present invention relates to a container for food products such as retorted food products, particularly to a container for food products using a foamed polyolefin-based resin sheet as a substrate.

Although polystyrene foam has hitherto been used as a container for food products such as retorted food products, noodles in cup and soup in cup, the use of polypropylene-based foam has been studied in recent years.

Such a container for food products is usually produced by vacuum- or pressure-forming a foamed resin sheet. Polyolefin-based resin foam has more serious formability problems when being vacuum-formed in comparison with that of polystyrene foam. In other words, since polystyrene resin is a non-crystalline resin, its physical strength decreases slowly as its temperature rises in the vicinity of temperatures at which the resin can be formed and the strength of the resin at the time of its forming is therefore relatively high. As a result, its forming can be done easily even if a draw ratio (the height of container)/(the minimum dimension of an opening of the container) is high. However, since polyolefin-based resin is a crystalline resin, its physical strength suddenly decreases with its temperature rises in the vicinity of temperatures at which the resin can be formed. As a result, although a product having a low draw ratio can be formed without problems, a container having a high draw ratio have difficulties in being formed practically because a great stretching rate of a sheet of a side wall of a container results in problems of breakage of a resin layer or breakage of cells in a foamed material. In particular, when a draw ratio is 0.6 or more, the aforementioned problem tends to occur suddenly and remarkably.

As a container for food products using polyolefin-based resin foam, those disclosed in Japanese Patent Kokai Publication Nos. 9-52300, 11-34251, 11-245928 and 9-226851 are known.

In the foamed polypropylene-based resin container disclosed in Japanese Patent Kokai Publication 9-52300, a height of which is greater than a diameter of its opening, its side wall part and its bottom part are formed separately and these parts are fixed with each other in such a manner that a folded edge of the side wall part-forming component holds an edge of the bottom part-forming component.

The container disclosed in Japanese Patent Kokai Publication 11-34251 is characterized by being obtained by adhering a film to a foamed polyethylene/polypropylene mixed resin sheet and vacuum-forming the resulting sheet.

The container disclosed in Japanese Patent Kokai Publication 11-245928 is characterized by being obtained by forming, with a mold composed of a male mold member and a female mold member, a foamed resin sheet comprising a foamed polypropylene-based resin sheet and a barrier layer laminated thereon that inhibits the permeation of oxygen.

According to the technique disclosed in Japanese Patent Kokai Publication 9-52300, although a container having a high ratio (the height of the container)/(the minimum dimension of an opening of the container) can be freely produced, a side wall part and a bottom part must be produced separately and there are inevitable problems of increase of the number of mold members and the number of man-hours needed for the production.

The technique disclosed in Japanese Patent Kokai Publication 11-34251 needs a special step of adhering a film to a resin foam, results in a high cost.

The technique disclosed in Japanese Patent Kokai Publication 11-245928 can not avoid the problem that the production of formed products having high draw ratios is difficult, even though the technique uses a pair of male and female mold members.

The container disclosed in Japanese Patent Kokai Publication 9-226851 is one obtained by using a thermoplastic resin foam containing foamed polypropylene resin. However, there is no disclosure about any containers having a draw ratio of 0.6 or more.

The object of the present invention is to provide a deeply-drawn foamed polyolefin-based resin container and a process for producing the same.

The foamed polyolefin-based resin container of the present invention is characterized in that it is a foamed resin container formed from a foamed polyolefin-based resin sheet comprising a foamed layer having an expansion ratio of from 1.5 to 8 times and a thickness of not greater than 6 mm and it has a draw ratio [(the height of the container)/(the minimum dimension of an opening of the container)] of from 0.6 to 1.5.

The minimum dimension of an opening of a container means, for example, the diameter of the opening in the case where the configuration of the opening of the container is a circle, the dimension of each side of the opening in the case where the opening is a square, the dimension of a shorter side in the case where the opening is a rectangle, and a distance between the opposite sides if the opening is a regular hexagon.

It is desirable that the foamed resin sheet has a non-foamed polyolefin-based resin layer having a thickness of from 5 to 100 μm on one side of the foamed layer.

Moreover, it is more desirable to use singly a foamed resin sheet having a non-foamed polyolefin-based resin layer having a thickness of from 5 to 100-μm on each side of the foamed layer, namely being composed of a three-layer structure of non-foamed polyolefin-based resin layer (non-foamed layer)/foamed polyolefin-based resin layer (foamed layer)/non-foamed polyolefin-based resin layer (non-foamed layer). In particular, it is preferable to use a foamed resin sheet in which at least two layers of the aforementioned three-layer foamed resin sheets are laminated, namely being composed of at least five-layer structure of non-foamed layer/foamed layer/non-foamed layer/foamed layer/ non-foamed layer.

By laminating a foamed polyolefin-based resin layer, deeply drawing property is improved and a foamed polyolefin-based resin container having a draw ratio of not less than 0.6, which has heretofore been said difficult to be obtained, can be produced easily in a low fraction defective. This also improves the forming efficiency in multiple-piece production of the foamed polyolefin-based resin container.

The non-foamed layer in the foamed resin sheet is desirably formed of a polyolefin-based resin having a long-chain branch.

By designing the foamed resin sheet to be such a laminated foam using the polyolefin-based resin having a long-chain branch as a non-foamed layer, the strength of the unprocessed foamed resin sheet in a heated and softened state is enhanced, resulting in the easy production of a foamed polyolefin-based resin container having a draw ratio of 0.6 or more by vacuum- or pressure-forming. This also improves the forming efficiency in multiple-piece production of the foamed polyolefin-based resin containers by vacuum or pressure forming.

It is desirable that the polyolefin-based resin has a branching index [A] satisfying $0.20 \leq [A] \leq 0.98$.

When the polyolefin-based resin having a long-chain-branch has the branching index [A] satisfying $0.20 \leq [A] \leq 0.98$, the polyolefin-based resin may have especially high strength in its molten state. Providing a non-foamed resin layer composed of such a polyolefin-based resin as a surface layer may generate an effect of preventing the generation of unevenness caused by cells formed inside the foamed layer by a foaming agent or caused by the breakage of cells. This may result in a multi-layer foamed polyolefin-based resin sheet having high surface smoothness and superior secondary processabilities for vacuum- or pressure-forming and the like. This also improves the forming efficiency in multiple-piece production of the container by vacuum- or pressure-forming.

In the case where the branching index of the polyolefin-based resin having a long-chain-branch is out of the aforementioned range, a melt viscosity decreases and the formability of deeply-drawn containers also deteriorates.

The branching index expresses the degree of long-chain branching and is a value defined by the following formula:

$$\text{Branching index } [A] = [\eta]Br/[\eta]Lin$$

In the formula, $[\eta]Br$ is the intrinsic viscosity of a branched polypropylene and $[\eta]Lin$ is the intrinsic viscosity of a semicrystalline linear polypropylene, which is mainly isotactic, having a weight average molecular weight substantially equal to that of the branched polypropylene.

An intrinsic viscosity is also known as an limiting viscosity number and is a measure of the ability of a polymer molecule to increase a viscosity of a solution in its general meaning. The intrinsic viscosity depends on the size and the configuration of the polymer molecule to be dissolved. Therefore, in comparison of a non-linear polymer and a linear polymer having a weight average molecular weight equal to that of the non-linear polymer, the intrinsic viscosity is a value indicating the configuration of the non-linear polymer molecule. That is, the foregoing ratio of the intrinsic viscosities is the measure of the degree of branching of the non-linear polymer and is defined as a branching index. A method for measuring the intrinsic viscosities of the long-chain-branched polypropylene having a long-chain branch and the polyolefin-based resin having a long-chain branch are disclosed in J. Appl. Polym. Sci., 14, 2947-2963 (1970), Elliot et al. In the present specification, all intrinsic viscosities are obtained from the measurements for samples dissolved in tetralin or orthodichlorobenzene at 135°C.

The weight average molecular weight (Mw) may be measured by various methods. Methods to be desirably used are the GPC method and the method that was published by M. L. McConnel in American Laboratory, May, 63-75 (1978), that is, the low-angle laser light scattering photometry.

In the foamed polyolefin-based resin container of the present invention, it is desirable that the foamed resin sheet to be used as a raw material for forming the container further comprises at least one gas barrier layer.

The gas barrier layer is a resin layer having an action of inhibiting the permeation of moisture or oxygen and is effective to secure a preservation term of the food products in the container.

The thickness of the foamed polyolefin-based resin sheet to be used as a raw material for forming the container, is desirably not less than 0.5 mm. The thickness of the foamed resin sheet refers to a thickness of a foamed resin sheet having a three-layer structure when this type of sheet is used, or to a total thickness when a laminated foamed resin sheet containing more layers is used.

The object of a first production process of the present invention is to provide a process for producing a foamed polyolefin-based resin container formed from a foamed polyolefin-based resin sheet comprising a foamed layer having an expansion ratio of from 1.5 to 8 times and a thickness of not greater than 6 mm wherein a draw ratio [(the height of the container)/(the minimum dimension of an opening of the container)] is from 0.6 to 1.5, and is characterized by comprising:

    (1) heating and softening the foamed resin sheet while clipping and fixing the edge of the foamed resin sheet with a clip; ( hereinafter it is referred to as a heating step )

(2) generating a pressure difference between both sides of the foamed resin sheet to expand the heated and softened foamed resin sheet so as to project toward the lower pressure side; ( hereinafter it is referred to as an expanding step )

(3) forming the heated and softened foamed resin sheet into a formed product having a configuration of the container by operation comprising making a male mold member having a configuration of the product touch the heated and softened foamed resin sheet from its projecting side, making the foamed resin sheet touch the surface of the male mold member while moving the male mold member toward the higher pressure side through the clip, and vacuuming a gap between the foamed resin sheet and the surface of the male mold member, thereby making the foamed resin sheet firmly touch the surface of the male mold member; (hereinafter it is referred to as a forming step ) and

(4) taking out the formed product having the configuration of the container (hereinafter it is referred to as a releasing step ) .

The aforementioned process allows a foamed polyolefin-based resin container having a draw ratio of from 0.6 to 1.5, which has heretofore been said difficult to be obtained, to be produced.

In the aforementioned process, it is also desirable that the following step (3') is conducted simultaneously with or after the step (3).

(3') establishing a configuration of an outer surface of the container by operation comprising engaging the male mold member with a female mold member, having an outer surface configuration of the product, installed in the opposite side relative to the foamed resin sheet simultaneously with or after the step (3), and vacuuming a gap between the foamed resin sheet and the surface of the female mold member, thereby making the foamed resin sheet firmly touch the surface of the female mold member

The aforementioned step (3') also allows a foamed polyolefin-based resin container having a draw ratio of from 0.6 to 1.5, which has heretofore been said difficult to be obtained, to be produced, and further having a predetermined thickness which is one recovered from a relatively thinned thickness of a foamed resin sheet due to deeply drawing property to that of an unprocessed sheet.

Heretofore, vacuum-forming of foamed resin containers has been mainly performed by a method in which a female mold member having a predetermined configuration is used, a heated and softened foamed resin sheet is made to touch a flange of an opening of the female mold member, the inside of the female mold member cavity is vacuumed, a touching portion of the foamed resin sheet is allowed to slide into the female mold member in synchronization with expansion of the foamed resin sheet, and the foamed resin sheet is finally made to touch the entire inner surface of the female mold member.

The most serious problem with the foamed polyolefin-based resin sheet in its vacuum-forming is that since the foamed resin sheet has only insufficient strength in the state of being softened, when the foamed resin sheet is stretched to enter the inside of a female mold member, the foamed resin sheet does not have sufficient strength to slide itself at the flange of the opening of the female mold member, and therefore, the foamed resin sheet is stretched only in its non-touching part into the female mold member cavity while being fixed in its edge. As a result, the foamed resin sheet suffers from local stretching that causes breakage of the foamed resin sheet itself or rupture of cells in the foamed resin sheet, resulting in defects in products.

Moreover, when the forming is performed by using a male mold member, since the foamed resin sheet covers the surface of the male mold member with being locally stretched while being fixed at the tip part of the male mold member, namely the part for forming a bottom part of a container, as well as at the flange of the male mold member, the foamed resin sheet is stretched locally in the vicinity of its corner positioned between its part for forming the bottom of the container and its part for forming the side wall of the container in a greater degree in comparison to its other parts. Also in such a case, breakage of the foamed resin sheet or rupture of cells in the foamed resin sheet occurs, resulting in defects in products.

In the present invention, a heated and softened foamed resin sheet is uniformly expanded and preliminarily stretched by air pressure in the expanding step (2) and then, in the forming step (3), the male mold member having a configuration of the product is forced to touch the heated and softened foamed resin sheet gradually from its tip part to the entire part with approaching from the projecting side of the foamed resin sheet and, at the same time, the male mold member is moved toward the higher pressure side through the aforementioned clip, thereby forming the foamed resin sheet into the formed product. In such a way, since forming is performed while stretching to some extent the heated and softened foamed polyolefin-based resin sheet having not so high strength, deeply-drawn containers can be produced without being locally stretched.

Moreover, the aforementioned step also allows a foamed polyolefin-based container having a sharp configuration, and further having a predetermined thickness which is one recovered from a relatively thinned thickness of a foamed resin sheet due to deeply drawing property as described above to that of an unprocessed sheet.

The female mold member is equipped with a plurality of air holes for the purpose of eliminating an air layer by vacuuming a gap between the female mold member surface and the foamed resin sheet after the foamed resin sheet has touched the female mold member in the above steps (3) and/or (3'). It is desirable to form the female mold member from air-permeable porous metallic material instead of equipping the air holes. The term "Vacuuming" is only required to be able to eliminate the air layer lying between the female mold member and the foamed resin sheet. In the case where the forming is carried out by vacuuming in the female mold member side, another constitution may be applied in which the air holes of the female mold member are opened to a vacuum chamber, a box body, without equipping any special vacuuming channels to the female mold member other than the vacuuming apparatus that is needed in the expanding step.

In the aforementioned expanding step (2), it is preferable that vacuuming is conducted in one side relative to the foamed resin sheet while atmospheric pressure is kept in the other side. Vacuuming can easily adjust a nice difference in pressure, and therefore, can achieve nice adjustment of the projecting height of the heated and softened foamed resin sheet with higher accuracy than pressurizing does.

In the expanding step, it is preferable that the projecting height of the foamed resin sheet (the height from the clipping level by the clip) is set to be 50% or more, preferably from 70 to 100%, of the height of the container.

Setting the projecting height of the foamed resin sheet to be 50% or more of the height of the container can control the local stretching of the foamed resin sheet that especially appears in the part of a foamed resin sheet which forms the side wall part of a container during forming. It also allows a foamed polyolefin-based resin container having a draw ratio of 0.6 or more to be produced easily in a lower proportion defective.

Incidentally, a method for producing a plurality of foamed polyolefin-based resin containers at the same time is disclosed in Japanese Patent Kokai Publication No. 9-48066, which discloses a technique of producing a plurality of containers from a sheet by the use of only a female mold member.

In general, in the production of resin containers by vacuum- or pressure-forming, the forming is conducted by heating and softening a foamed resin sheet, making it touch an edge part of an opening of a female mold member and sucking from the female mold member to stretch the resin sheet to make it touch the surface of the female mold member to cover. At this time, the resin sheet receives a stress stretching the resin sheet toward the side wall part in its part that touches the edge part of the opening of the female mold member to constitute the edge of a container in the state where that part of the resin sheet touches the edge of the female mold member, at the same time when the side wall parts and bottom parts of the container are sucked.

In the case of vacuum-forming a foamed polyolefin-based resin, there is a formability problem being more serious than that with polystyrene foam. Since polystyrene resin is a non-crystalline resin, its physical strength decreases slowly as its temperature rises in the vicinity of temperatures at which the resin can be formed and the strength of the resin at the time of its forming is therefore relatively high. For such reasons, in the case where a multiple pieces of containers are formed at the same time, the forming can be done easily even though the polystyrene foam sheet receives such a stress stretching toward the container-forming parts adjacent to its part for constituting the edge of a container in that part. In contrast, since polyolefin-based resin is a crystalline resin, its physical strength suddenly decreases with its temperature rises in the vicinity of temperatures at which the resin can be formed.

Accordingly, the container formed by the above-mentioned known technique can be obtained only in a high proportion defective resulted in problems of breakage of a resin layer or breakage of cells in a foam material due to a high stretching ratio of the foamed resin sheet in its side wall part, particularly in the portion from edge part to the upper part of the side wall part. It therefore is difficult to say that the known technique be a practical multiple-piece forming method. In particular, the aforementioned problem tends to suddenly arise remarkably when containers having a draw ratio of 0.6 or more are produced by the so-called multiple-piece forming method.

The object of a second production process of the present invention is also to provide a process by which a plurality of foamed polyolefin-based resin containers having a draw ratio of 0.6 or more can be produced through a certain series of steps under conditions where the occurrence of defective products caused by breakage of a resin layer or breakage of cells in a foam are suppressed more remarkably than by the conventional technique, that is a process for producing a plurality of foamed polyolefin-based resin containers formed from a foamed polyolefin-based resin sheet comprising a foamed layer having an expansion ratio of from 1.5 to 8 times and a thickness of not greater than 6 mm, wherein a draw ratio [(the height of the container) /(the minimum dimension of an opening of the container)] is from 0.6 to 1.5, the process comprising:

(1) heating and softening the foamed resin sheet while clipping and fixing the edge of the foamed resin sheet with a clip; (hereinafter it is referred to as a heating step)
(2) making a partitioning member touch or almost touch the foamed resin sheet to define a plurality of container-forming areas; (hereinafter it is referred to as a partitioning step)
(3) generating a pressure difference between both sides of the foamed resin sheet so that the side where the partitioning member is present become the lower pressure side, and making the heated and softened foamed resin sheet firmly touch the partitioning member so as to project the foamed resin sheet toward the lower pressure side in every container-forming area; (hereinafter it is referred to as an expanding step)

(4) forming the heated and softened foamed resin sheet into a formed product having a configuration of the container by operation comprising making a male mold member having a configuration of the product touch the heated and softened foamed resin sheet from its projecting side, making the foamed resin sheet touch the surface of the male mold member while moving the male mold member toward the opposing side relative to the foamed resin sheet, and vacuuming a gap between the foamed resin sheet and the surface of the male mold member, thereby making the foamed resin sheet firmly touch the surface of the male mold member; (hereinafter it is referred to as a forming step) and

(5) taking out the formed product having the configuration of the container. (hereinafter it is referred to as a releasing step)

In accordance with the above constitution, a plurality of foamed polyolefin-based resin containers having a draw ratio of 0.6 or more can be produced under conditions where the occurrence of defective products caused by breakage of a resin layer or breakage of cells in a foam are suppressed more remarkably than by the conventional technique.

Another process for the second production process of the present invention is a process for producing a plurality of a foamed polyolefin-based resin containers formed from a foamed polyolefin-based resin sheet comprising a foamed layer having an expansion ratio of from 1.5 to 8 times and a thickness of not greater than 6 mm wherein a draw ratio [(the height of the container)/(the minimum dimension of an opening of the container)] is from 0.6 to 1.5, the process comprising:

(1) heating and softening the foamed resin sheet while clipping and fixing the edge of the foamed resin sheet with a clip; (hereinafter it is referred to as a heating step)

(2) making a partitioning member touch or almost touch the foamed resin sheet to define a plurality of container-forming areas; (hereinafter it is referred to as a partitioning step)

(3) generating a pressure difference between both sides of the foamed resin sheet so that the side where the partitioning member is present become the lower pressure side, and making the heated and softened foamed resin sheet firmly touch the partitioning member so as to project the foamed resin sheet toward the lower pressure side in every container-forming area; (hereinafter it is referred to as an expanding step)

(4) forming the heated and softened foamed resin sheet into a formed product having a configuration of the container by operation comprising making a male mold member having an inner surface configuration of the product touch the heated and softened foamed resin sheet from its projecting side, making the foamed resin sheet touch the surface of the male mold member while moving the male mold member toward the opposing side relative to the foamed resin sheet, and vacuuming a gap between the foamed resin sheet and the surface of the male mold member, thereby making the foamed resin sheet firmly touch the surface of the male mold member; (hereinafter it is referred to as a first stage of a forming step)

(4') establishing a configuration of an outer surface of the container by operation comprising engaging the male mold member with a female mold member, having an outer surface configuration of the product, installed in the opposite side relative to the foamed resin sheet simultaneously with or after the step (4), and vacuuming a gap between the foamed resin sheet and the surface of the female mold member, thereby making the foamed resin sheet firmly touch the surface of the female mold member; (hereinafter it is referred to as a second stage of a forming step) and

(5) taking out the formed product having the configuration of the container. (hereinafter it is referred to as a releasing step)

Also in accordance with the above constitution, a plurality of foamed polyolefin-based resin containers having a draw ratio of 0.6 or more can be produced under conditions where the occurrence of defective products caused by breakage of a resin layer or breakage of cells in a foam are suppressed more remarkably than by the conventional technique.

Heretofore, vacuum-forming of foamed resin containers has been mainly performed by a method in which a female mold member having a predetermined configuration is used, a heated and softened foamed resin sheet is made to touch a flange of an opening of the female mold member, the inside of the female mold member is vaccumed, a touching portion of the foamed sheet is allowed to slide into the female mold member in synchronization with expansion of the foamed resin sheet, and the foamed resin is finally made to touch the entire inner surface of the female mold member as shown in drawings of the aforementioned known publication.

The most serious problem with the foamed polyolefin-based resin sheet in its vacuum-forming is that since the foamed resin sheet has only insufficient strength in the state of being softened, when the foamed sheet is stretched to enter the inside of a female mold member, the foamed resin sheet does not have sufficient strength to slide itself at the flange of the opening of the female mold member, and therefore, the foamed resin sheet is stretched only in its non-touching part into the female mold member cavity while being fixed in its edge. As a result, the foamed resin sheet suffers from local stretching that occurs breakage of the foamed resin sheet itself or rupture of cells in the foamed resin sheet, resulting in defects in products.

Moreover, when the forming is performed by the use of a male mold member, since the foamed resin sheet covers the surface of the male mold member with being locally stretched while being fixed at the tip part of the male mold member, namely the part for forming a bottom part of a container as well as the flange of the male mold member, the foamed resin sheet is stretched locally in the vicinity of its corner positioned between its part for forming the bottom of the container and its part for forming the side wall of the container in a greater degree in comparison to its other parts. Also in such a case, breakage of the foamed resin sheet or rupture of cells in the foamed resin sheet occurs, resulting in defects in products.

In the second production process of the present invention, container-forming areas are once defined by making a partitioning member touch the unprocessed foamed resin sheet in partitioning step (2), the heated and softened foamed resin sheet in every container-forming area is uniformly expanded and preliminarily stretched by air pressure in the expanding step (3) and then, in the forming step (4), the male mold member having a configuration of the product is forced to touch the softened foamed resin sheet gradually from its tip part to the entire part with approaching from the projecting side of the foamed resin sheet and, at the same time, the male mold member is moved toward the opposite side of the foamed resin sheet through the aforementioned clip, thereby forming the foamed resin sheet into the product.

In such a way, since forming is performed while stretching to some extent the heated and softened foamed polyolefin-based resin sheet having not so high strength, deeply-drawn containers can be produced without being locally stretched and the occurrence of defects due to breakage of sheet or rupture of cells in the foamed resin sheet can be effectively prevented.

Moreover, the aforementioned step (4') allows a foamed polyolefin-based container having a sharp configuration, and further having a predetermined thickness which is one recovered from a relatively thinned thickness of a foamed resin sheet due to deeply-drawing property as described above to that of an unprocessed sheet.

The mold member is equipped with a plurality of air holes for the purpose of eliminating an air layer by vacuuming a gap between the mold member surface and the foamed resin sheet after the foamed resin sheet has touched the mold member above steps (4) and/or (4'). It is desirable to form the mold member from air-permeable porous metallic material instead of equipping the air holes. The term "Vacuuming" is only required to be able to eliminate the air layer lying between the mold member and the foamed resin sheet. Another constitution may be applied in which vacuuming is performed by forming air holes and air channels in a mold member having a container's configuration and connecting them with a vacuuming apparatus or in which the mold member is made of porous metallic material and the entire box body in which the mold member has been installed is vacuumed.

In the aforementioned expanding step (2), it is preferable that vacuuming is conducted in one side relative to the foamed resin sheet while atmospheric pressure is kept in the other side. Vacuuming can easily adjust a nice difference in pressure, and therefore, can achieve nice adjustment of the projecting height of the heated and softened foamed resin sheet with higher accuracy than pressurizing does.

In the expanding step, it is preferable that the projecting height of the foamed resin sheet (the height from the clipping level by the clip) is set to be 50% or more, preferably from 70 to 100%, of the height of the container.

Setting the projecting height of the foamed resin sheet to be 50% or more of the height of the container can control the local stretching of the foamed resin sheet that especially appears in the part of a foamed resin sheet which forms the side wall part of a container during forming. It also allows a plurality of foamed polyolefin-based resin containers having a draw ratio of 0.6 or more to be produced in a series of steps at the same time more easily in a lower proportion defective.

A desirable embodiment is wherein the partitioning member used in the present invention is such a base body having a rib standing thereon that the end surface of the rib touches the foamed resin sheet to define the container-forming areas (so-called a rib-type), and wherein the side where the partitioning member touches the foamed resin sheet is set to be the lower pressure side.

Moreover, another desirable embodiment is wherein the partitioning member used in the present invention is a frame body having a plurality of through holes, such as a mere lattice, that makes the aforementioned container-forming areas to be cavities (so-called a frame type), and wherein the frame body touches the foamed resin sheet, whereby the through holes define the container-forming areas, and wherein the side where the partitioning member touches the foamed resin sheet is set to be the lower pressure side.

In the partitioning step, in the case where the partitioning member touches an unprocessed foamed resin sheet, the touching surface forms the container-forming areas, or in the case where the portioning member almost touches an unprocessed resin sheet, the partitioning member firmly touches the unprocessed foamed resin sheet for the first time when the expansion is commenced in the expanding step. At this time, the container-forming areas are settled.

When the partitioning member is the frame body, since its thickness is thinner than a rib-type one, it is also possible to make the frame body touch the foamed resin sheet to form the container-forming areas and then move a heater forward to heat. In this case, a desirable embodiment also includes a constitution in that a cooling liquid is passed in the frame body in order to prevent the temperature of the frame body from rising in repeated forming. Moreover, it is preferable that the frame body is constituted in such a manner that the frame is equipped with a proper arm so that the frame moves through the action of the arm.

When the partitioning member is the frame body, another desirable embodiment includes a constitution in that the frame body is fixed to or integrated with the clip instead of the constitution of equipping the arm. In such a constitution, the partitioning step of forming the container-forming areas is performed at the same time the foamed resin sheet is clipped and fixed.

It is also possible to form the container-forming areas by equipping a pair of partitioning members separately in both sides relative to the foamed resin sheet and holding the foamed resin sheet with the partitioning members. As for the partitioning members equipped as a pair, both of them may be of the rib type or of the frame type or may be a combination of the rib type and the frame type.

The use of the partitioning member allows the foamed resin sheet to be partitioned into container-forming areas and to be formed into a configuration of containers after being preliminarily stretched uniformly.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step.

Fig. 1 illustrates a section of an example of a foamed polyolefin-based resin container;
Fig. 2 illustrates an example of a forming apparatus suitable for producing a foamed polyolefin-based resin container of the present invention;
Fig. 3 illustrates a process for producing a foamed polyolefin-based resin container;
Fig. 4 illustrates another process for producing a foamed polyolefin-based resin container;
Fig. 5 is a side elevation view illustrating an apparatus for producing a foamed polyolefin-based resin container;
Fig. 6 is a partial perspective view of a partitioning member;
Fig. 7 illustrates a process for producing a foamed polyolefin-based resin container;
Fig. 8 illustrates another apparatus for producing a foamed polyolefin-based resin container; and
Fig. 9 illustrates still another process for producing a foamed polyolefin-based resin container.

Embodiments of the present invention will be explained based on drawings.

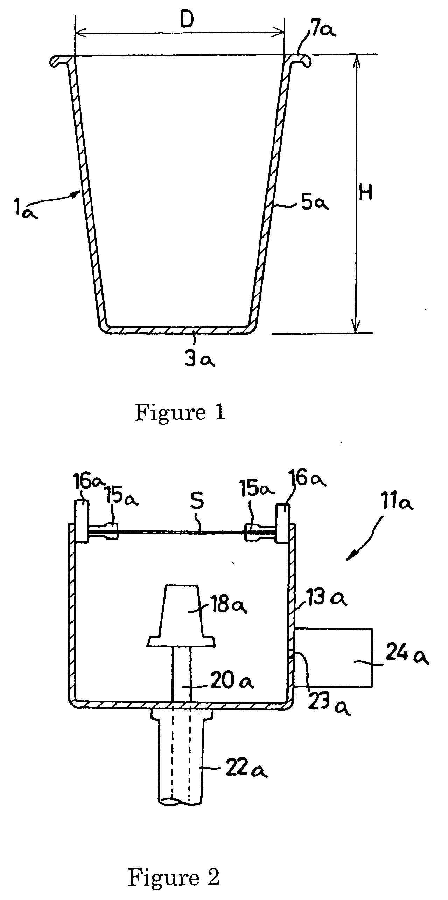

Fig. 1 is a sectional view of a foamed resin container of the present invention. The configuration of the opening of the container is a circle. The aperture D is the minimum dimension of the opening of the container, H is the height of the container and a draw ratio is defined by H/D. The container is composed of a bottom part 3a, a side wall part 5a and a flange-like edge part 7a surrounding the opening. Although the configuration of the opening may be a polygon such as a square and a rectangle, it is preferably a circle for the convenience of use.

Fig. 2 illustrates an example of an apparatus for producing the container of the present invention. In this example, a vacuum-forming apparatus is shown. The vacuum-forming apparatus 11a is composed of a box body 13a, a clip 15a for clipping a foamed polypropylene resin sheet S, a clip operation member 16a for opening and closing the clip 15a, a male mold member 18a, an actuator 22a for supporting the male mold member 18a with a rod 20a in such a manner that the male mold member can be freely moved forward and backward, a pressure reducing unit 24a for reducing the pressure inside the box body to a predetermined pressure through an air hole 23a. Although not shown in the drawing, a heater H for heating the foamed resin sheet S is installed at the heating position and the withdrawal position in such a manner that the heater can be moved freely.

The clip 15a may also be one that clips the foamed resin sheet S at several points, preferably at four points. It may clip the foamed resin sheet S at two or four sides facing one another or may be a frame body-like clip of, for example, circular or quadrangular shape.

The pressure reducing unit 24a may be any one that can reduce the pressure inside the box body 13a to a predetermined pressure and can adjust the heated and softened foamed resin sheet at a predetermined projecting height.

In a production apparatus that makes a foamed resin sheet be projected by pressurizing, a pressurizing unit is used instead of the pressure reducing unit 24a. In the case of pressurizing, it is difficult to adjust the projection height of the foamed resin sheet depending on the type of the resin unit. However, for example, an air chamber having a small capacity is provided through a box body and a valve. While closing the valve, the inside of the air chamber is set to a predetermined pressure. After the closing of a high-pressure air supplying channel, the valve is opened to interconnect the air chamber and the inside of the box body, thereby a predetermined amount of air is supplied. As a result, it becomes easy to control the projection height of the foamed resin sheet.

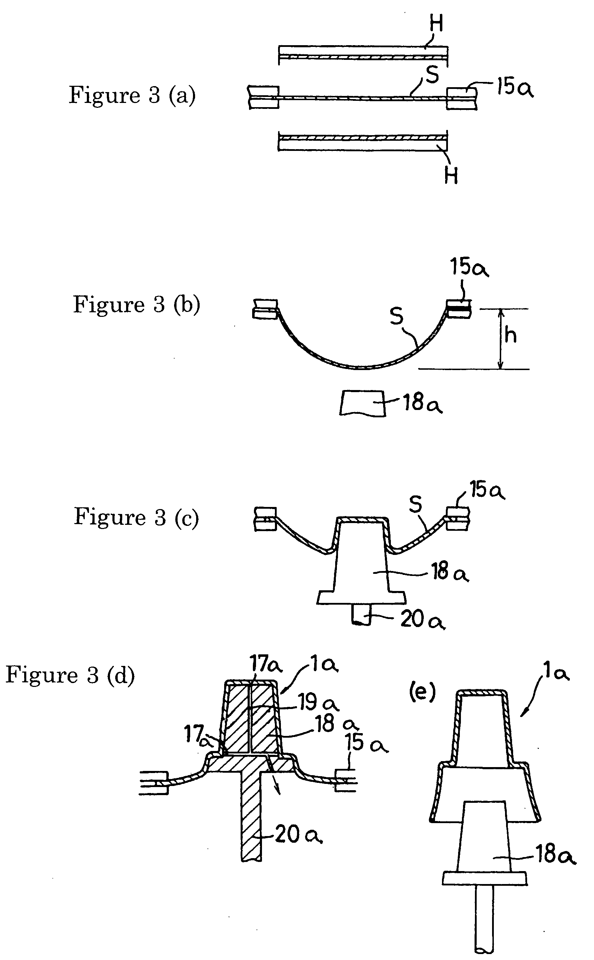

A process for producing a foamed polypropylene-based resin container of the present invention using the aforementioned production apparatus will be explained based on the example shown in Fig. 3. The apparatus shown in this figure is one using a vacuum-forming apparatus like that shown in Fig. 2. A box body is not shown.

Fig. 3(a) shows the heating step. In the figure, a situation is illustrated where a foamed resin sheet S is clipped with a clip 15a and the foamed resin sheet is heated with heaters H from its upper and lower surfaces. Although in this example, the heaters H are moved to the heating positions after the foamed resin sheet S is clipped, another constitution may be applied in which the foamed resin sheet can be moved continuously, a heating zone in which a heater H is fixed and a forming zone are set up, and a foamed resin sheet is heated in the heating zone and then is moved to the forming zone and is formed there.

Fig. 3(b) shows the expanding step. When the inside of the box body 13a is vacuumed to a predetermined reduced pressure, the heated and softened foamed resin sheet S projects toward the lower pressure side. A projecting height is represented by h. As earlier mentioned, it is preferable that h ≥ 0.5H. A male mold member 18a approaches the foamed resin sheet S from its projecting side.

Figs. 3(c)-(d) illustrate the forming step. The male mold member 18a touches the tip part of the projecting foamed resin sheet first and then the male mold member moves toward the higher pressure side along a direction almost perpendicular to the foamed resin sheet clamping surface. Through such operations, the projecting foamed resin sheet S touches the male mold member 18a to cover it just as a cloth covers the male mold member. Therefore, the foamed resin sheet is not locally stretched particularly when it touches the side wall part of the male mold member and deeply-drawn containers can be formed. By applying a constitution where an air hole 17a is formed in the male mold member 18a so as to interconnect to an air channel 19a and the air present between the heated and softened foamed resin sheet S and the male mold member 18a is further exhausted, the occurrence of defects due to entrapped air can be prevented.

The container 1 that was formed into a predetermined configuration and cooled and solidified is taken out from the male mold member 18a after the edge of the foamed resin sheet S is released from the clip 15a (the releasing step). After trimming the edge of the foamed resin sheet, containers, which are products, may be obtained. Another step of folding the edge of a container downwardly may be added. Alternatively, a portion having such a configuration may be provided to mold members.

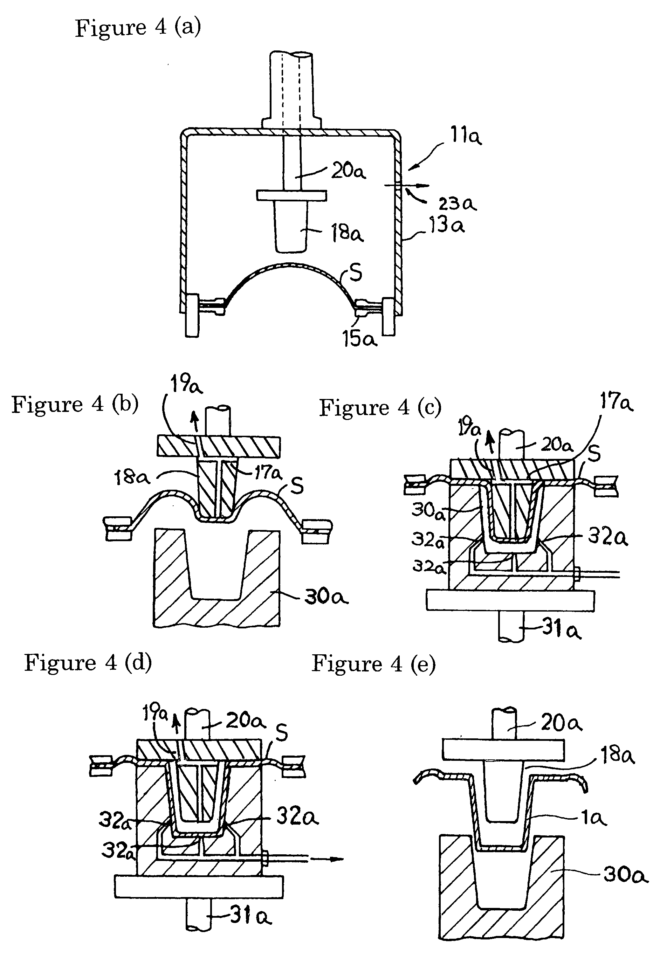

In Fig. 4 is shown an example of a method for producing a container by using a combination of a male mold member 18a and a female mold member 30a. Also in this example, an embodiment in which the inside of a box body is vacuumed is illustrated.

In the forming of a container are used the male mold member 18a having an inner configuration and the female mold member 30a having an outer configuration. A forming apparatus is illustrated in Fig. 4(a). The forming apparatus 11a is almost the same as that shown in Fig. 2 and has a box body 13a and a clip 15a for holding a foamed resin sheet S. The forming apparatus is designed so as to vacuum inside the box body 13a to a predetermined pressure through an air hole 23a. The male mold member 18a is excavated with an air hole 17a and an air channel 19a. The female mold member 30a is also excavated with an air hole 32a. The male mold member 18a is connected to a rod 20a so as to be freely moved forward and backward. The female mold member 30a is also connected to a rod 31a so as to freely move forward and backward. In Figs 4(b)-(e), the box body 11a is not shown.

In Fig. 4(a), the foamed resin sheet S is clipped with the clip 15a and heated with heaters H from its both sides in the same manner as shown in Fig. 3(a). After that, the foamed resin sheet is stretched toward the male mold member 18a by reducing pressure inside the box body 13a to make the space in the side where the male mold member is present set to be the lower pressure side (the expanding step).

The male mold member 18a approaches the foamed resin sheet S from the side of its projecting top part (Fig. 4(a)) and then touches the foamed resin sheet S from the projecting top part (Fig. 4(b)). The male mold member 18a moves toward the female mold member through the clip 15a while allowing its outer surface to be covered with the foamed resin sheet S by reducing pressure of a space between the foamed resin sheet and the male mold member though an air hole 17a. (the first stage of the forming step) In the side of the female mold member 30a, the top of the female mold member 32a advances to the position where a heater H was present so as to reach in the vicinity of the clip 15a after the withdrawal of the heater. The male mold member 18a that holds the foamed resin sheet S in contact with its outer surface which corresponds to an inner surface of the product approaches the female mold member until the foamed resin sheet S is clamped between the bottom surface of the male mold member and the upper edge of the female mold member 30a. In this state, the foamed resin sheet faces the forming cavity of the female mold member (Fig. 4(c)).

When the air accumulated between the surface of the female mold member 30a and the foamed resin sheet S is exhausted through the air hole 32a, the foamed resin sheet S is expanded so as to touch and cover the inner surface of the female mold member and the forming is completed (Fig. 4(d)) (the second stage of the forming step). After that, the container la formed from the foamed resin sheet is cooled in the male and female mold members and released from the mold members (Fig. 4(e)) (the releasing step).

The second stage of the forming step allows a foamed polyolefin-based container having a sharp configuration, and further having a predetermined thickness which is one recovered from a relatively thinned thickness of a foamed resin sheet due to deeply-drawing property as described above to that of an unprocessed sheet.

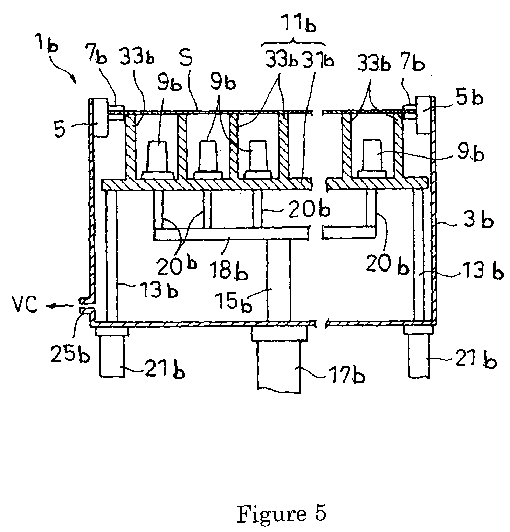

Fig. 5 illustrates an example of an apparatus for producing the container of the present invention. In this example is shown a vacuum-forming apparatus. The vacuum-forming apparatus 1b has a box body 3b, a clip 7b for clipping a foamed resin sheet S, which is a raw material, a clip operation member 5a for opening and closing the clip 7b, a plurality of male mold members 9b, and a partitioning member 11b. The box body 3b has an air hole 25b and is connected to a vacuuming unit VC (not shown) through the air hole 25b. The pressure inside the box body 3b can be reduced to a predetermined degree and the apparatus is constituted so that the projecting height of the heated and softened foamed resin sheet can be adjusted to a predetermined value.

The partitioning member 11b in this example is composed of a base 31b and ribs 33b standing thereon. The base 31b is connected to a linear actuator 21b, such as a hydraulic cylinder and an air cylinder, through a rod 13b for supporting the partitioning member. The entire partitioning member 11b is designed so as to be moved freely between the position where it touches a foamed resin sheet S and a backed position. Fig. 5 illustrates a state where after the foamed resin sheet S was heated and softened, the partitioning member 11b was moved forward to touch the foamed resin sheet and container-forming areas have been formed.

Although not shown in this figure, heaters for a pair of heating the foamed resin sheet S are installed inside and outside the box body 3b of the vacuum-forming apparatus 1b so as to heat the foamed resin sheet from its both side in such a manner that each of them can be moved between its heating position and its withdrawal position freely.

Each of the male mold members 9b is positioned inside a frame that defines an area separated by a rib 33b and is fixed to a mold member supporting base 18b through a mold member supporting rod 20b which passes across the base 31b of the partitioning member 11b. The mold member supporting base 18b is connected to a linear actuator 17b through a rod 15b. The vacuum-forming apparatus is, as a whole, constituted in such a manner that the male mold member 9b can be freely moved forward and backward so that it goes forward from its backed position toward the opposite side relative to the foamed resin sheet through the foamed resin sheet holding level.

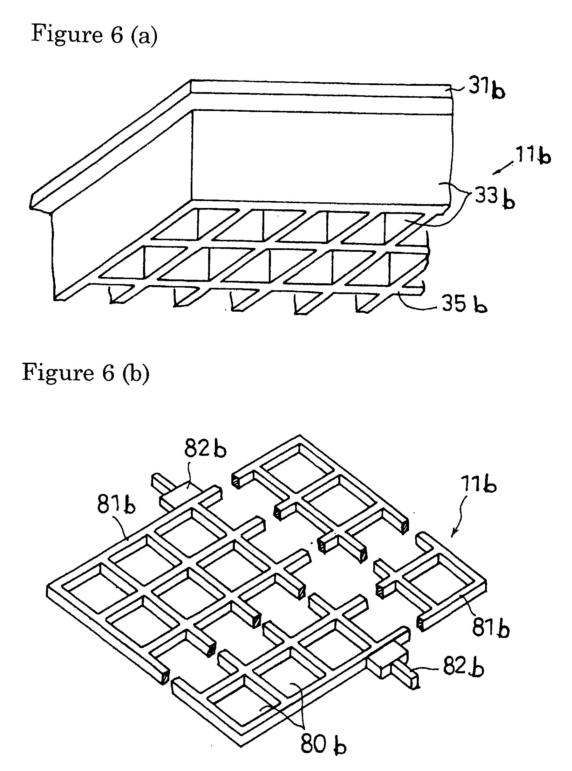

Fig. 6 shows the constitution of the partitioning member 11. The partitioning member 11 for defining the container-forming areas together with the foamed resin sheet S in the aforementioned vacuum-forming apparatus 1 is illustrated in detail in Fig. 6(a) as a partial perspective view. The partitioning member 11b is made up of a rib 33b standing on a base 31b. The end surface 35b of the rib 33b touches the foamed resin sheet and the touching surface defines the container-forming areas.

In Fig. 6(b), an example of a partitioning member of a lattice-like frame type. In this example, an outer frame 81b of a frame body having cavities 80b is equipped with connectors 82b for connecting and fixing the partitioning member to a clip operation member. The partitioning member 11b shown in Fig. 6(b) is designed to serve as a clip. For example, it clips and fixes a foamed resin sheet in combination with a rectangular frame-like clip corresponding to the outer frame 81b.

It may also be possible to define container-forming areas by making the partitioning member shown in Fig. 6(a) and the partitioning member 11b shown in Fig. 6(b) touch a foamed resin sheet S clipped and fixed with a clip from the opposite sides.

In the case where a partitioning member 11b is separated from a clip, a clip 7b may be one that clips the foamed resin sheet S at several points, preferably at four points. It may clip the foamed resin sheet S at two or four sides facing one another or may be a frame body-like clip of, for example, circular or quadrangular shape.

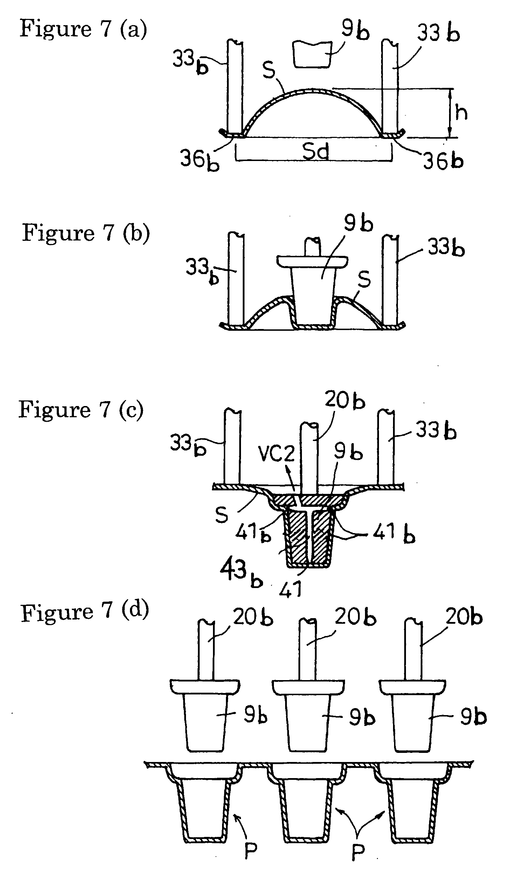

Fig. 7 illustrates an example of the step for producing a foamed resin container by the use of the vacuum-forming apparatus shown in Fig. 5. This figure mainly shows, under magnification, a part where one container is formed. A box body 3b is not shown. Although the heating step is also not illustrate, it is performed by clipping a foamed resin sheet S with the clip 7b and heating it from its upper and lower sides with heaters moved to the heating positions, in the similar manner to those usually applied.

Although the heating step is not illustrated, it may be possible to apply a constitution in which a heater is installed so as to freely more forward and backward in the box body in which the forming is performed and the heating step and the forming step are performed without accompanying the movement of the foamed resin sheet. Alternatively, it may be also possible to apply another constitution in which the foamed resin sheet can be moved continuously, a heating zone in which a heater is fixed and a forming zone are set up, and a heating step of heating a foamed resin sheet in the heating zone is performed, and then the foamed resin sheet is moved to the forming zone and the forming step is carried out there. Although any heater that can heat a foamed resin sheet uniformly can be employed, a plane heater is used preferably.

Fig. 7(a) illustrates an expanding step. The end surface 35b of the rib 33b touches the foamed resin sheet S and the touching part 36b partitions to define a plurality of container-forming areas Sd (the partitioning step). The foamed resin sheet S that has been partitioned inside each of the container-forming areas Sd uniformly projects toward the male mold member 9b to form a hemisphere by reducing the pressure inside the box body 13b, that is, in the side of the partitioning member 11b, to a predetermined degree. When representing the projecting height by h and the height of the container by H, it is preferable that h ≥ 0.5H as previously mentioned.

Figs. 7(b)-(c) illustrate the forming step. The male mold member 9b touches the tip part of the projecting foamed resin sheet first and then the male mold member moves toward the higher pressure side along a direction almost perpendicular to the sheet clamping surface. Through such operations, the projecting foamed resin sheet S touches the male mold member 9b to cover it just as a cloth covers the male mold member. Therefore, the foamed resin sheet is not locally stretched particularly when it touches the side wall part of the male mold member and deeply-drawn containers can be formed. By applying a constitution where an air hole 41b is formed in the male mold member 9b so as to interconnect to an air channel 43b and the air present between the heated and softened foamed resin sheet S and the male mold member 9b is further exhausted by means of a vacuuming apparatus VC2, the occurrence of defects due to entrapped air.

Fig. 7(d) illustrates the releasing step. After the edge of the foamed resin sheet is released from the clip 7b, the container P formed into a predetermined configuration by forcing the foamed resin sheet to touch and cover the male mold member 9b is taken out of the male mold member. In this example, three containers are shown. After trimming the foamed resin sheet surrounding the edge of a container formed by the touching part 36b, the container P, the product, is obtained. Another step of folding the edge of a container downwardly may be added. Alternatively, a portion having such configuration may be provided to the mold members.

Fig. 7 illustrates an example of an apparatus for forming a container by using a combination of a female mold member 56b and a male mold member 9b. The apparatus uses a vacuum-forming apparatus being the same as that shown in Fig. 5 except being vertically inverted. This figure, like Fig. 5, illustrates a state where after the foamed resin sheet S was heated and softened, the partitioning member 11b was moved forward to touch the foamed resin sheet and container-forming areas have been formed.

The female mold member 56b is fixed to a female mold member base 57b and is designed so as to be freely moved between the position close to the foamed resin sheet S and a backed position by a hydraulic cylinder 63b mounted to a frame 52b.

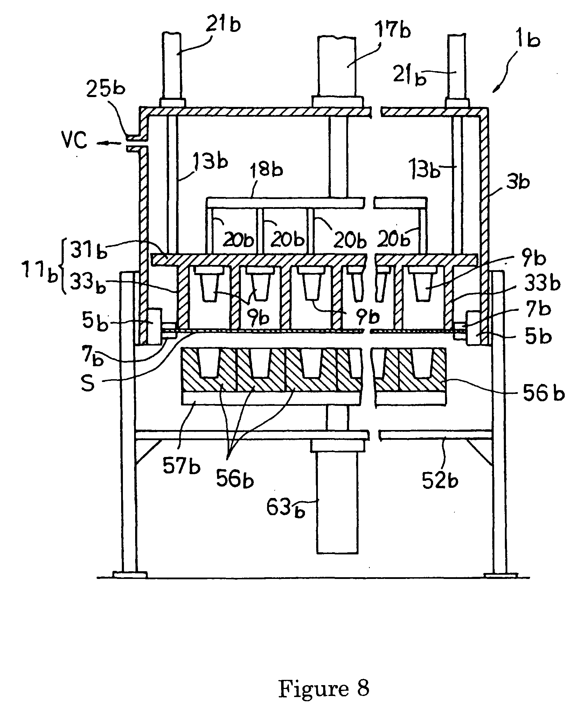

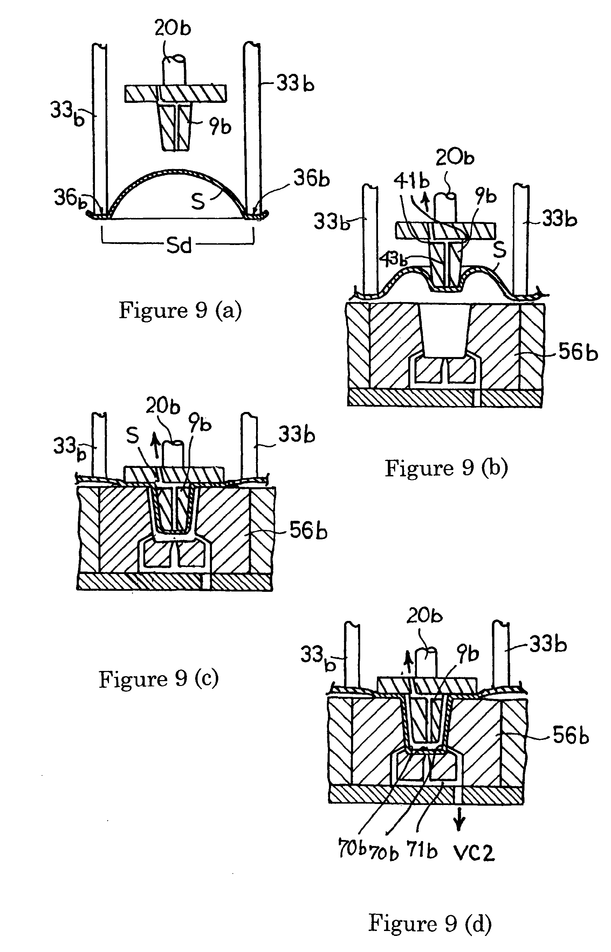

Fig. 9 shows an example of the step for producing a foamed resin container by using the vacuum-forming apparatus shown in Fig. 8. This figure also shows only a part where one container is formed under magnification. A box body 3b is not shown.

Fig. 9(a) illustrates the expanding step. Like Fig. 7(a), the end surface 35b of the rib 33b touches the foamed resin sheet S heated and softened in the heating step (not shown) and the touching part 36b partitions to define a plurality of container-forming areas Sd (the partitioning step). Then, the foamed resin sheet S which has been partitioned inside each of the container-forming areas uniformly projects toward the mole mold member 9b to form a hemisphere by reducing the pressure inside the box body 13b, that is, in the side of the partitioning member 11b, to a predetermined degree.

Figs. 9(b)-(d) illustrate the forming step. A male mold member 9b is moved toward the foamed resin sheet S from its projecting top part (Fig. 9(b)) and touch the foamed resin sheet S at its projecting top part first. Subsequently, while covering the outer surface of the male mold member with the foamed resin sheet S by exhausting the air from the space between the foamed resin sheet S and the male mold member 9b through a air hole 41b, the male mold member 9b is moved toward the female mold member 56b through the touching surface 36b, thereby forming the foamed resin sheet into a configuration of the outer surface of the male mold member, which corresponds to the configuration of the inner surface of a container (the first stage of the forming step).

The female mold member 56b has been moved so that its upper end reaches in the vicinity of a clip 7b after the withdrawal of the heater. The male mold member 9b holding the foamed resin sheet S on its outer peripheral surface approaches as close as its bottom surface clamps the foamed resin sheet S together with the upper end of the female mold member 56b. In this state, the foamed resin sheet S faces the cavity surface of the female mold member 56b (Fig. 9(c)).

In this state, when the air in a space between the surface of the female mold member 56b and the foamed resin sheet S is exhausted through an air hole 70 and an air channel 71b in the female mold member 56b, the foamed resin sheet is forced to firmly touch the inner surface of the female mold member and thereby the outer surface of a container is formed (Fig. 9(d), the second stage of the forming step).

After the second stage of the forming step, the container P made up of the foamed resin sheet S is cooled in the mold members and then taken out (the release step).

Moreover, the aforementioned step allows a foamed polyolefin-based container having a sharp configuration, and further having a predetermined thickness which is one recovered from a relatively thinned thickness of a foamed resin sheet due to deeply-drawing property as described above to that of an unprocessed sheet.

As for a production apparatus of such a type that a foamed resin sheet is projected by pressurizing (a pressure-forming apparatus), a box body 3b is installed in the opposite side of a male mold member 9b in the case of such an apparatus that the forming is performed by the use of only a male mold member, like the apparatus shown in Fig. 5, or a box body 53b is installed in the side of the female mold member in the case of such an apparatus that the forming is performed by the use of a female and male mold members like the apparatus shown in Fig. 9. By pressurizing inside the box body 3b or 53b, the foamed resin sheet projects toward the side of the male mold member 9b. In the case where containers are formed by the pressurizing system, it is difficult to adjust the projecting height of the foamed resin sheet depending upon the type of the foamed resin sheet as mentioned previously. However, for example, installing a leak valve to the box body and adjusting the opening degree of the valve allow the projecting height of the foamed resin sheet to be controlled.

In the foamed resin container of the present invention, the polyolefin-based resin constituting the foamed layer is exemplified by homopolymers of ethylene, propylene, butene and the like, copolymers obtained from two or more kinds of monomers selected from the aforementioned monomers and copolymers of at least one kind of monomer selected from the aforementioned monomers and other monomers. Examples of the copolymers include an ethylene/$\alpha$-olefin copolymer and a propylene/$\alpha$-olefin copolymer.

Examples of polyethylenes (PE) or copolymers of ethylene and other monomers, that is, polyethylene-based resins include polyethylenes such as low density polyethylene and high density polyethylene; ethylene/$\alpha$-olefin copolymers such as an ethylene/propylene copolymer, an ethylene/butene-1 copolymer, an ethylene/4-methyl-1-pentene copolymer, an ethylene/hexane-1 copolymer and an ethylene/octane-1 copolymer; ethylene-based copolymers made up of repeat units derived from at least one kind of vinyl monomer and repeat units derived from ethylene such as an ethylene/methyl methacrylate copolymer and an ethylene/vinyl acetate copolymer; and mixtures thereof.

As the propylene/$\alpha$-olefin copolymer, propylene-based polymers such as a propylene/$\alpha$-olefin block copolymer and a propylene/$\alpha$-olefin random copolymer, and mixtures thereof can be mentioned. Examples of the $\alpha$-olefin in the propylene/$\alpha$-olefin block copolymer and the propylene/$\alpha$-olefin random copolymer include $\alpha$-olefins having 2 or from 4 to 10 carbons such as ethylene, butene-1 and octane-1.

Among the above-listed polyolefins, examples of preferable raw materials include (a) polypropylene (PP) having a long-chain-branch and (b) a polypropylene prepared by producing, in a first stage, a crystalline PP having an intrinsic viscosity of 5 dl/g or more and successively producing, in a second stage, a crystalline PP having an intrinsic viscosity of less than 3 dl/g, the polypropylene containing the PP obtained in the first stage in an amount of 0.05 to 25% by weight and having, as a whole, an intrinsic viscosity of less than 3 dl/g and Mw/Mn of less than 10 because the use of these specific polyolefins results in high uniformity of the foam materials and in a multi-layer foamed polyolefin sheet having especially superior property for vacuum-forming. For instance, one of the commercially available products of (a) is Polypropylene PF815 manufactured by Montell.

Considering the influence to the environment and the like, examples of a foaming agent to be used for forming the foamed layer preferably includes an inert substance such as water and carbon dioxide gas. In particular, when polypropylene is used as a resin for constituting a foamed layer, the use of carbon dioxide gas is preferred.

As a polyolefin-based resin for forming the non-foamed layer, a polyolefin-based resin having a long chain branch is preferred and concrete examples thereof include:

a) copolymers of an olefin monomer and at least one kind of monomer selected from the group of monomers consisting of unsaturated carboxylic acids, unsaturated carboxylic acid anhydrides, epoxy group-containing vinyl monomers, unsaturated carboxylic acid esters and vinyl esters;
b) acid-modified olefin-based polymers grafted with an unsaturated carboxylic acid or its anhydride; and
c) polypropylenes having a long-chain branch.

Examples of the preceding a) copolymers of an olefin monomer and at least one kind of monomer selected from the group of monomers consisting of unsaturated carboxylic acids, unsaturated carboxylic acid anhydrides, epoxy group-containing vinyl monomers, unsaturated carboxylic acid esters and vinyl esters include ethylene/(meth)acrylic acid copolymers, metal-crosslinked products of ethylene/(meth)acrylic acid copolymers, ethylene/glycidyl methacrylate copolymers, ethylene/glycidyl methacrylate/vinyl acetate copolymers, ethylene/glycidyl methacrylate/methyl (meth)acrylate copolymers, ethylene/(meth)acrylic ester copolymers, ethylene/(meth)acrylic ester/maleic anhydride copolymers and ethylene/vinyl acetate copolymers.

Examples of the foregoing b) acid-modified olefin-based polymers grafted with an unsaturated carboxylic acid or its anhydride include maleic anhydride-graft modified ethylene-based polymers and maleic anhydride-graft modified propylene-based polymers.

Examples of the aforementioned c) polypropylenes having a long-chain branch include commercially available products such as the above-mentioned Montell's product, products made by Sumitomo Chemical Co., Ltd., and the like.

Although the thickness of the non-foamed layer is not particularly limited as long as surface smoothness, namely appearance, of the foamed resin sheet is good, it is, for example, 1 μm or more, preferably 5 μm or more, more preferably 10 μm or more, and still more preferably 50 μm or more. The upper limit of the thickness may optionally be set depending on the thickness, application, etc. of the multi-layer foamed polyolefin-based resin sheet. If the non-foamed layer is too thick, the foamed layer cannot fully show its characters.

In the present invention, the non-foamed layer is a layer having an expansion ratio of from 1.0 time to 1.5 time, preferably from 1.0 time to 1.1 time, and the foamed layer is a layer having an expansion ratio of from 1.5 time to 8 times, preferably from 3 times to 6 times. If the expansion ratio of the foamed layer is less than 1.5 time, the formed layer cannot fully show its characters such as light weight, heat insulation property and the like. If the expansion ratio of the foamed layer is more than 8 times, breakage of cells easily occurs in the shaping of the foamed sheet. The expansion ratio may be adjusted by adjusting the quantity of a foaming agent to be used or by conducting vacuum-forming after the shaping of the foamed resin sheet.

The aforementioned multi-player foamed polyolefin-based resin sheet may be produced, for example, by a method of laminating a foamed sheet and a non-foamed sheet, a method of co-extruding a resin for constituting a foamed layer and a resin for constituting a non-foamed layer, or the like.

The thickness of the foamed resin sheet to be used as a raw material for forming the container is desirably not less than 0.5 mm. The thickness of the foamed resin sheet refers to a thickness of a foamed resin sheet having a three-layer structure when this type of sheet is used, or to a total thickness when a laminated foamed resin sheet containing more layers is used.

In the foamed resin sheet of the present invention, a resin for constituting a gas barrier layer which is preferably laminated is not particularly limited and known gas barrier resins may be used. Specific examples of such gas barrier resins include the following:

Saponified products of polyvinyl esters such as polyvinyl alcohol; saponified products of ethylene/vinyl ester copolymers such as ethylene/vinyl alcohol copolyer; polyester resins such as polyethylene terephthalate, polybutylene terephthalate, polyethylene naphthalate and polyhydroxy benzoic acid; polyaminde resins such as nylon-6, nylon-6,6/methaxylene diamine/adipic acid condensation polymer, polymethyl methacryl imide, diethylene triamine/adipic acid copolymer and its salts; aramid resin; acrylic resins such as polymethyl methacrylate, polyacrylic acid, poly(sodium acrylate), poly(2-hydroxyethyl acrylate), poly(2-hydroxyethyl methacrylate), polyacrylamide, ethylene/acrylic acid copolymer and its salts; halogen-containing resins such as polyvinyl chloride, polyvinylidene fluoride and polytetrafluoroethylene; engineering plastics such as polycarbonate resin, polysulfone resin, polyethersulfone resin, polyether ether ketone resin, polyphenylene ether resin, polyphenylene oxide resin, polyallylene sulfide resin, polymethylene oxide resin and polyacetal resin. So-called modified resins, which can be obtained by graft modification, crosslinking or molecular chain terminal modification of these resins, may also be employed.

The gas barrier layer to be used in the present invention is formed by laminating a gas barrier layer in the form of a gas barrier resin film with a foamed resin sheet. As a laminating method, known methods such as dry lamination may be employed. The gas barrier resin film may be produced by a method of forming a film from the aforementioned resin or its composition in a molten state or a method for forming a liquid film from a solution of the aforementioned resin or its composition and then drying it.

The method for forming a film from a resin or its composition in a molten state is not limited and can be exemplified by a co-extrusion method, a melt coating method and an extrusion lamination method applied to usual forming techniques such as T-die forming, inflation forming, injection molding, blow molding and stretching blow molding. It is also a desirable embodiment that the film formed by the aforementioned methods is subjected to stretching that is conventionally conducted, such as uniaxial stretching, zone stretching, flat sequential stretching, flat simultaneous biaxial stretching and tubular simultaneous stretching.

To obtain a film by a method for producing a film by dissolving a resin or its composition in a solvent, forming a liquid film from the resultant solution and then drying it, a method for coating a release film with a resin or its composition containing a medium such as water to form a liquid film, drying the film and then peeling it off may be employed, for example.

Examples of the method for coating include roll coating methods such as the direct gravure method, the reverse gravure method, the microgravure method, the two roll beat coating method and the bottom feed three reverse coating method, the doctor knife method, the die coating method, the dip coating method, the bar coating method, and coating methods combining the aforementioned methods.

**Claims**

1. A foamed polyolefin-based resin container formed from a foamed polyolefin-based resin sheet comprising a foamed layer having an expansion ratio of from 1.5 to 8 times and a thickness of not greater than 6 mm wherein a draw ratio [(the height of the container)/(the minimum dimension of an opening of the container)] is from 0.6 to 1.5.

2. The foamed polyolefin-based resin container according to claim 1 wherein the foamed resin sheet has a non-foamed polyolefin-based resin layer having a thickness of from 5 to 100 μm on one side of the foamed layer.

3. The foamed polyolefin-based resin container according to claim 1 wherein the foamed resin sheet has a non-foamed polyolefin-based resin layer having a thickness of from 5 to 100 μm on each side of the foamed layer.

4. The foamed polyolefin-based resin container according to claim 3 wherein the foamed resin sheet is a sheet in which at least two layers are laminated wherein each of the layers is composed of a three-layer structure of non-foamed polyolefin-based resin layer/foamed polyolefin-based resin layer/non-foamed polyolefin-based resin layer.

5. The foamed polyolefin-based resin container according to any one of claims 2 to 4 wherein the non-foamed layer in the foamed resin sheet is formed of a polyolefin-based resin having a long-chain branch.

6. The foamed polyolefin-based resin container according to claim 5 wherein the polyolefin-based resin has a branching index [A] satisfying $0.20 \leq [A] \leq 0.98$.

7. The foamed polyolefin-based resin container according to any one of claims 2 to 6 wherein the foamed resin sheet further comprises at least one gas barrier layer.

8. A process for producing a foamed polyolefin-based resin container formed from a foamed polyolefin-based resin sheet comprising a foamed layer having an expansion ratio of from 1.5 to 8 times and a thickness of not greater than 6 mm wherein a draw ratio [(the height of the container)/(the minimum dimension of an opening of the container)] is from 0.6 to 1.5, the process comprising:

(1) heating and softening the foamed resin sheet while clipping and fixing the edge of the foamed resin sheet with a clip;
(2) generating a pressure difference between both sides of the foamed resin sheet to expand the heated and softened foamed resin sheet so as to project toward the lower pressure side;
(3) forming the heated and softened foamed resin sheet into a formed product having a configuration of the container by operation comprising making a male mold member having a configuration of the product touch the heated and softened foamed resin sheet from its projecting side, making the foamed resin sheet touch the surface of the male mold member while moving the male mold member toward the higher pressure side through the clip, and vacuuming a gap between the foamed resin sheet and the surface of the male mold member, thereby making the foamed resin sheet firmly touch the surface of the male mold member; and
(4) taking out the formed product having the configuration of the container.

9. A process for producing a foamed polyolefin-based resin container formed from a foamed polyolefin-based resin sheet comprising a foamed layer having an expansion ratio of from 1.5 to 8 times and a thickness of not greater than 6 mm wherein a draw ratio [(the height of the container)/(the minimum dimension of an opening of the container)] is from 0.6 to 1.5, the process comprising:

(1) heating and softening the foamed resin sheet while clipping and fixing the edge of the foamed resin sheet with a clip;
(2) generating a pressure difference between both sides of the foamed resin sheet to expand the heated and softened foamed resin sheet so as to project toward the lower pressure side;
(3) forming the heated and softened foamed resin sheet into a formed product having a configuration of the container by operation comprising making a male mold member having a configuration of the product tough the heated and soften foamed resin sheet from its projecting side, making the foamed resin sheet touch the surface of the male mold member while moving the male mold member toward the higher pressure side through the clip, and vacuuming a gap between the foamed resin sheet and the surface of the male mold member, thereby making the foamed resin sheet firmly touch the surface of the male mold member;
(3') establishing a configuration of an outer surface of the container, the step comprising engaging the male mold member with the female mold member installed in the opposite side relative to the foamed resin sheet simultaneously with or after the first stage of the forming step, and vacuuming a gap between the foamed resin sheet and the female mold member to make the foamed resin sheet firmly touch the female mold member, thereby making the foamed resin sheet firmly touch the female mold member; and
(4) taking out the formed product having the configuration of the container.

10. A process for producing a plurality of foamed polyolefin-based resin containers formed from a foamed polyolefin-based resin sheet comprising a foamed layer having an expansion ratio of from 1.5 to 8 times and a thickness of not greater than 6 mm wherein a draw ratio [(the height of the container)/ (the minimum dimension of an opening of the container)] is from 0.6 to 1.5, the process comprising:

(1) heating and softening the foamed resin sheet while clipping and fixing the edge of the foamed resin sheet with a clip;
(2) making a partitioning member touch or almost touch the foamed resin sheet to define a plurality of container-forming areas;
(3) generating a pressure difference between both sides of the foamed resin sheet so that the side where the partitioning member is present become the lower pressure side, and making the heated and softened foamed resin sheet firmly touch the partitioning member so as to project the foamed resin sheet toward the lower pressure side in every container-forming area;
(4) forming the heated and softened foamed resin sheet into a formed product having a configuration of the container by operation comprising making a male mold member having a configuration of the product touch the heated and softened foamed resin sheet from its projecting side, making the foamed resin sheet touch the surface of the male mold member while moving the male mold member toward the opposing side relative to the foamed resin sheet, and vacuuming a gap between the foamed resin sheet and the surface of the male mold member, thereby making the foamed resin sheet firmly touch the surface of the male mold member; and
(5) taking out the formed product having the configuration of the container.

11. A process for producing of a plurality of foamed polyolefin-based resin containers formed from a foamed polyolefin-based resin sheet comprising a foamed layer having an expansion ratio of from 1.5 to 8 times and a thickness of not greater than 6 mm wherein a draw ratio [(the height of the container)/ (the minimum dimension of an opening of the container)] is from 0.6 to 1.5, the process comprising:

(1) heating and softening the foamed resin sheet while clipping and fixing the edge of the foamed resin sheet with a clip;
(2) making a partitioning member touch or almost touch the foamed resin sheet to define a plurality of container-forming areas;
(3) generating a pressure difference between both sides of the foamed resin sheet so that the side where the partitioning member is present become the lower pressure side, and making the heated and softened foamed resin sheet firmly touch the partitioning member so as to project the foamed resin sheet toward the lower pressure side in every container-forming area;
(4) forming the heated and softened foamed resin sheet into a formed product having a configuration of the container by operation comprising making a male mold member having an inner surface configuration of the product touch the heated and softened foamed resin sheet from its projecting side, making the foamed resin sheet touch the surface of the male mold member while moving the male mold member toward the opposing side relative to the foamed resin sheet, and vacuuming a gap between the foamed resin sheet and the surface of the male mold member, thereby making the foamed resin sheet firmly touch the surface of the male mold member;
(4') establishing a configuration of an outer surface of the container by operation comprising engaging the male mold member with a female mold member, having an outer surface configuration of the product, installed in the opposite side relative to the foamed resin sheet simultaneously with or after the step (4), and vacuuming a gap between the foamed resin sheet and the surface of the female mold member, thereby making the foamed resin sheet firmly touch the surface of the female mold member; and
(5) taking out the formed product having the configuration of the container.

12. The process for the producing a foamed polyolefin-based resin container according to claim 10 or 11 wherein the partitioning member is a base body having a rib standing thereon that the end surface of the rib touch as the foamed resin sheet to define the container-forming areas, and wherein the side where the partitioning member touches the foamed resin sheet is set to be the lower pressure side.

13. The process for producing a foamed polyolefin-based resin container according to claim 10 or 11 wherein the partitioning member is a frame body having a plurality of through holes, and wherein the frame body touches the foamed resin sheet, whereby the through holes define the container-forming areas, and wherein the side where the partitioning member touches the foamed resin sheet is set to be the lower pressure side.

14. The process for producing of a foamed polyolefin-based resin container according to claim 8, 9, 10 or 11 wherein the foamed resin sheet has a non-foamed polyolefin-based resin layer having a thickness of from 5 to 100 $\mu$m on one side of the foamed layer.

**15.** The process for producing a foamed polyolefin-based resin container according to claim 8, 9, 10 or 11 wherein the foamed resin sheet has a non-foamed polyolefin-based resin layer having a thickness of from 5 to 100 $\mu$m on each side of the foamed layer.

**16.** The process for producing a foamed polyolefin-based resin container according to claim 15 wherein the foamed resin sheet is a sheet in which at least two layers are laminated wherein each of the layers is composed of a three-layer structure of non-foamed polyolefin-based resin layer/foamed polyolefin-based resin layer/non-foamed polyolefin-based resin layer.

**17.** The process for producing a foamed polyolefin-based resin container according to any one of claims 8 to 16 wherein generating a pressure difference is conducted by vacuuming.

Figure 1

Figure 2

Figure 3 (a)

H

S

15a

H

Figure 3 (b)

15a

S

h

18a

Figure 3 (c)

S

15a

18a

20a

Figure 3 (d)

17a    1a

19a

18a

17a

15a

20a

(e)

1a

18a

Figure 4 (a)

Figure 4 (b)

Figure 4 (c)

Figure 4 (d)

Figure 4 (e)

Figure 5

Figure 6 (a)

Figure 6 (b)

Figure 7 (a)

Figure 7 (b)

Figure 7 (c)

Figure 7 (d)

Figure 8

Figure 9 (a)

Figure 9 (b)

Figure 9 (c)

Figure 9 (d)

**European Patent Office**

## EUROPEAN SEARCH REPORT

Application Number

EP 01 10 0051

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JP 06 000906 A (JSP CORP) 11 January 1994 (1994-01-11) * column 8, paragraphs 44,45 * * column 9, paragraph 54 – column 10 * * column 11, paragraph 59 – column 13, paragraph 61; claims 1,2; figure 1; table 1 * | 1-3 | B32B5/18 B32B27/32 B65D81/34 B29C51/10 //B29K105:04 |
| X | & DATABASE WPI Section Ch, Week 199406 Derwent Publications Ltd., London, GB; Class A17, AN 1994-045321 * abstract * | 1-3 | |
| X | JP 05 124125 A (JSP CORP) 21 May 1993 (1993-05-21) * column 3, paragraphs 9,10 * * column 6, paragraph 26 * * column 7-8, paragraph 33 * * column 9-10, paragraphs 40,43,46; claims * | 1 | |
| X | & DATABASE WPI Section Ch, Week 199325 Derwent Publications Ltd., London, GB; Class A17, AN 1993-200170 * abstract * | 1 | TECHNICAL FIELDS SEARCHED (Int.Cl.7) B65D B29C B32B B29L |
| X | DE 195 44 858 A (SILVER PLASTICS GMBH & CO KG) 3 April 1997 (1997-04-03) * page 5, line 6 – line 18; claims 1,3,4,8,14-16,21 * * page 6, line 25 – line 64; figures 3A,3B * * page 7, line 53 – line 55; figure 6; example 1 * | 1-3,7 | |

-/--

The present search report has been drawn up for all claims

| Place of search | Date of completion of the search | Examiner |
|---|---|---|
| MUNICH | 15 May 2001 | Kanetakis, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 01 10 0051

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 344 726 A (SEKISUI PLASTICS) 6 December 1989 (1989-12-06) * abstract; claims 1,2,7,8,10,11 * * page 5, line 16 - line 32; figures 1,2 * | 9,14,15, 17 | |
| A | DATABASE WPI Section Ch, Week 199406 Derwent Publications Ltd., London, GB; Class A17, AN 1994-045323 XP002166590 & JP 06 000908 A (JSP KK), 11 January 1994 (1994-01-11) * abstract * | 1-5 | |
| A | EP 0 570 221 A (GRACE W R & CO) 18 November 1993 (1993-11-18) * abstract; claims 1,4,5,12-14,17,18 * * page 3, line 23 - line 42 * * page 3, line 51; example 2 * | 1,7 | |
| A | EP 0 519 386 A (HIMONT INC) 23 December 1992 (1992-12-23) * page 2, line 24 - line 32 * * page 3, line 3 - line 9 * * page 3, line 35 - line 58 * * page 11, line 3 - line 7; claim 13 * | 5,6 | **TECHNICAL FIELDS SEARCHED** (Int.Cl.7) |
| D,A | PATENT ABSTRACTS OF JAPAN vol. 1997, no. 06, 30 June 1997 (1997-06-30) & JP 09 052300 A (JSP CORP), 25 February 1997 (1997-02-25) * abstract * | 1-3 | |

-/--

The present search report has been drawn up for all claims

| Place of search | Date of completion of the search | Examiner |
|---|---|---|
| MUNICH | 15 May 2001 | Kanetakis, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 01 10 0051

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | PATENT ABSTRACTS OF JAPAN<br>vol. 1999, no. 05,<br>31 May 1999 (1999-05-31)<br>& JP 11 034251 A (HAISHIITO KOGYO KK),<br>9 February 1999 (1999-02-09)<br>* abstract * | 1-3 | |
| D,A | PATENT ABSTRACTS OF JAPAN<br>vol. 1999, no. 14,<br>22 December 1999 (1999-12-22)<br>& JP 11 245928 A (SEKISUI PLASTICS CO LTD), 14 September 1999 (1999-09-14)<br>* abstract * | 1,2,7 | |
| D,A | DATABASE WPI<br>Section Ch, Week 199745<br>Derwent Publications Ltd., London, GB;<br>Class A32, AN 1997-485946<br>XP002166592<br>& JP 09 226851 A (DENKA KAKO KK),<br>2 September 1997 (1997-09-02)<br>* abstract * | 1-3 | TECHNICAL FIELDS SEARCHED (Int.Cl.7) |
| A | DE 44 19 162 A (POLARCUP GMBH)<br>7 December 1995 (1995-12-07)<br>* claims 1-6; figures * | 1-3 | |
| A | US 5 116 881 A (KATZ LEON ET AL)<br>26 May 1992 (1992-05-26)<br>* column 8, line 27 - column 9, line 4 *<br>* column 11, line 31 - line 41; example 12 * | 1-3,7-9 | |

The present search report has been drawn up for all claims

| Place of search | Date of completion of the search | Examiner |
|---|---|---|
| MUNICH | 15 May 2001 | Kanetakis, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 10 0051

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2001

| Patent document cited in search report | | Publication date | Patent family member(s) | | Publication date |
|---|---|---|---|---|---|
| JP 06000906 | A | 11-01-1994 | JP 3140847 B | | 05-03-2001 |
| JP 05124125 | A | 21-05-1993 | JP 2986993 B | | 06-12-1999 |
| DE 19544858 | A | 03-04-1997 | NONE | | |
| EP 0344726 | A | 06-12-1989 | JP 1301235 | A | 05-12-1989 |
| | | | JP 1817984 | C | 27-01-1994 |
| | | | JP 5023589 | B | 05-04-1993 |
| | | | AU 630315 | B | 22-10-1992 |
| | | | AU 3583389 | A | 30-11-1989 |
| | | | CA 1293913 | A | 07-01-1992 |
| | | | DE 68918159 | D | 20-10-1994 |
| | | | DE 68918159 | T | 02-03-1995 |
| | | | KR 9611745 | B | 30-08-1996 |
| | | | US 4911978 | A | 27-03-1990 |
| | | | ZA 8904114 | A | 30-01-1991 |
| JP 6000908 | A | 11-01-1994 | JP 2948987 | B | 13-09-1999 |
| EP 0570221 | A | 18-11-1993 | AU 3310193 | A | 18-11-1993 |
| | | | CA 2096078 | A | 14-11-1993 |
| | | | JP 6166081 | A | 14-06-1994 |
| | | | NZ 245868 | A | 21-12-1995 |
| EP 0519386 | A | 23-12-1992 | AT 197059 | T | 15-11-2000 |
| | | | AU 1846692 | A | 24-12-1992 |
| | | | BR 9202331 | A | 19-01-1993 |
| | | | CA 2071779 | A,C | 22-12-1992 |
| | | | CN 1069038 | A,B | 17-02-1993 |
| | | | DE 69231509 | D | 23-11-2000 |
| | | | DE 69231509 | T | 03-05-2001 |
| | | | DK 519386 | T | 27-12-2000 |
| | | | ES 2153351 | T | 01-03-2001 |
| | | | FI 922879 | A | 22-12-1992 |
| | | | JP 6093033 | A | 05-04-1994 |
| | | | MX 9203077 | A | 30-06-1994 |
| | | | NO 922435 | A | 22-12-1992 |
| | | | US 5508319 | A | 16-04-1996 |
| | | | US 5552104 | A | 03-09-1996 |
| | | | ZA 9204281 | A | 31-03-1993 |
| JP 09052300 | A | 25-02-1997 | NONE | | |
| JP 11034251 | A | 09-02-1999 | NONE | | |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 01 10 0051

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2001

| Patent document cited in search report | | Publication date | Patent family member(s) | | Publication date |
|---|---|---|---|---|---|
| JP 11245928 | A | 14-09-1999 | NONE | | |
| JP 9226851 | A | 02-09-1997 | NONE | | |
| DE 4419162 | A | 07-12-1995 | NONE | | |
| US 5116881 | A | 26-05-1992 | AT | 122701 T | 15-06-1995 |
| | | | CA | 2078123 A,C | 15-09-1991 |
| | | | DE | 69109860 D | 22-06-1995 |
| | | | DE | 69109860 T | 26-10-1995 |
| | | | EP | 0520028 A | 30-12-1992 |
| | | | ES | 2072606 T | 16-07-1995 |
| | | | JP | 2638532 B | 06-08-1997 |
| | | | JP | 7266413 A | 17-10-1995 |
| | | | JP | 2521388 B | 07-08-1996 |
| | | | KR | 9603278 B | 08-03-1996 |
| | | | WO | 9113933 A | 19-09-1991 |
| | | | US | 5149579 A | 22-09-1992 |
| | | | US | 5180751 A | 19-01-1993 |

EPO FORM P0459

For more details about this annex : see Official Journal of the European Patent Office, No. 12/82